# FASCICULE DE BREVET EUROPEEN

(11) **EP 0 549 389 B1**
(45) Date de publication et mention de la délivrance du brevet: **08.03.1995**
(21) Numéro de dépôt: 92403273.3
(22) Date de dépôt: 03.12.1992
(51) Int. Cl.: B23K 26/00, B23K 37/04, B23Q 7/03

(54) **Dispositif de guidage et de transfert d'au moins deux flans de tôle à souder**
Vorrichtung zum Führen und Fördern von zum mindesten zwei zu verschweissenden Blechen
Device for guiding and transporting at least two metal sheets to be welded

(30) Priorité: 20.12.1991 FR 9115936
(43) Date de publication de la demande: 30.06.1993
(73) Titulaire: SOLLAC, 92800 Puteaux (FR)
(72) Inventeur: Peru, Gilles, F-59240 Dunkerque (FR); Sauvage, Francis, F-59240 Dunkerque (FR); Le Roy, Yvon, F-59940 Le Doulieu (FR); Sion, Charles, F-59133 Camphin-en-Carembault (FR)
(74) Mandataire: Lanceplaine, Jean-Claude

(56) Documents cités:
- EP-A- 0 234 346
- EP-A- 0 299 358
- EP-A- 0 438 612

## Description

La présente invention a pour objet un dispositif de guidage et de transfert d'au moins deux flans de tôle à souder bord à bord, notamment dans une installation de soudage par faisceau laser de deux flans de tôle de différentes formes géométriques et/ou de différentes épaisseurs, par exemple pour l'industrie automobile ou les industries utilisatrices de pièces semi-finies.

Il est connu pour souder deux flans de tôle bord à bord de les joindre et de soumettre le plan de joint desdits flans à un faisceau en faisant défiler en continu ces flans de tôle perpendiculairement à l'axe du faisceau laser, voir p.ex. EP-A-438612.

D'une manière générale, ces installations de soudage comportent une zone de positionnement latéral de l'un des flans de tôle par rapport à l'axe du faisceau, puis une zone d'accostage des deux flans de tôle bord à bord et enfin une zone de maintien bord à bord des deux flans de tôle et d'entraînement de ces flans au-dessous du faisceau laser.

A cet effet, on connaît différents dispositifs de maintien des flans de tôles dans la zone de soudage qui utilisent pour chaque flan de tôle des systèmes de bridage vertical constitués par exemple par des rouleaux.

Mais, ce genre de dispositif de maintien ne permet pas de souder ensemble des flans de tôle de différentes formes géométriques.

On connaît également un dispositif de maintien qui comporte des paires de palettes, l'une à côté de l'autre, portant chacune au moins un flan de tôle.

Les palettes sont amenées sur une butée contre laquelle les côtés de base des flans de tôle sont guidés afin d'aligner les bords frontaux desdits flans.

Les flans de tôles sont fixés par exemple par serrage sur les palettes. Ce dispositif comporte également, au niveau de la zone de soudage des rouleaux de pression inclinés pour tenir par le haut les flans de tôle.

Ce dispositif connu présente un inconvénient qui réside principalement dans le fait qu'il ne permet pas de réduire le jeu entre les bords à souder des deux flans de tôle si bien qu'au moment du soudage, le jeu augmente à cause de la dilatation des flans de tôle, entraînant ainsi des soudures de mauvaises qualités.

La présente invention a pour but d'éviter ces inconvénients en proposant un dispositif qui permet de contrôler le jeu entre les bords à souder des deux flans de tôle au cours de leur déplacement pendant toute l'opération de soudage.

La présente invention a donc pour objet un dispositif de guidage et de transfert d'au moins deux flans de tôle à souder bord à bord, notamment dans une installation de soudage par faisceau laser, comprenant, d'une part, pour chaque flan de tôle, des moyens de support du flan de tôle selon un plan de référence horizontal et déplaçables horizontalement en direction du faisceau laser et des moyens de pression verticale du flan de tôle sur les moyens de support et déplaçables horizontalement en synchronisation avec lesdits moyens de support pour le déplacement par adhérence des flans de tôle et, d'autre part, des moyens de maintien en référence selon un plan vertical du bord à souder de l'un des flans de tôle dans l'axe du faisceau laser et des moyens de mise en pression latérale des bords à souder des deux flans de tôle.

Selon d'autres caractéristiques de l'invention:
- les moyens de support sont formés par une chaîne à patins articulés constituant une surface de contact continue avec la face inférieure du flan de tôle correspondant et par des rouleaux libres en rotation supportant la chaîne à patins correspondante, l'axe de rotation desdits rouleaux étant perpendiculaire au sens de déplacement de la chaîne à patins et horizontal,
- les moyens de pression verticale sont formés par une chaîne à patins articulés constituant une surface de contact continue avec la face supérieure du flan de tôle correspondant et par des rouleaux libres en rotation d'appui de la chaîne à patins sur ladite face supérieure, l'axe de rotation desdits rouleaux étant perpendiculaire au sens de déplacement de la chaîne à patins et horizontal,
- au moins trois rouleaux sont en contact simultanément avec un patin de chaque chaîne à patin,
- chaque chaîne à patins forme une boucle dans un plan perpendiculaire auxdits flans de tôle et comporte des moyens d'entraînement en rotation,
- les moyens d'entraînement de chaque chaîne à patins sont formés par des rouleaux moteurs intercalés entre lesdits rouleaux de support ou d'appui, au moins un rouleau moteur étant en contact avec un patin,
- les rouleaux moteurs comportent un pignon engrènant avec une crémaillère prévue sur la face des patins opposée à la face en contact avec le flan de tôle,
- chaque patin comporte sur sa face en contact avec le flan de tôle correspondant une couche d'un matériau assurant un coëfficient de frottement suffisant pour créer l'adhérence avec le flan de tôle, par exemple un polymère,
- les moyens de maintien en référence selon un plan vertical du bord à souder de l'un des flans de tôle et les moyens de mise en pression latérale des bords à souder des deux flans de tôle sont disposés de part et d'autre du plan de joint des flans de tôle et coopérent chacun avec l'un de ces flans de tôle,
- les moyens de maintien en référence selon un plan vertical du bord à souder de l'un des flans de tôle sont formés par deux chemins de guidage latéral, parallèles et disposés de part et d'autre du plan horizontal de déplacement des flans de tôle, chaque chemin de guidage coopérant, d'une part, avec une surface latérale des patins de la chaîne correspondante et, d'autre part, avec une surface de référence verticale,
- chaque chemin de guidage est formé par des galets à axe vertical et libres en rotation,
- les galets sont en appui sur la surface latérale des patins et sont montés sur un support fixé sur la surface de référence verticale,
- les galets sont montés directement sur les patins et sont en appui sur la surface de référence verticale,
- les moyens de mise en pression latérale des bords à souder des deux flans de tôles sont formés par deux chemins de guidage latéral, parallèles, et disposés de part et d'autre du plan horizontal de déplacement des flans de tôle, chaque chemin de guidage coopérant, d'une part, avec les patins de la chaîne correspondante et, d'autre part, avec au moins un organe de poussée selon une direction perpendiculaire au plan de joint des flans de tôle,
- chaque chemin de guidage est formé par des galets à axe vertical et libres en rotation,
- les galets sont en appui sur la surface latérale des patins et sont montés sur un support relié audit organe de poussée,
- les galets sont montés directement sur les patins et sont en appui sur un guide relié audit organe de poussée,
- ledit organe de poussée est constitué par au moins un vérin,
- les moyens de pression verticale sont formés par une bande continue en contact avec la face supérieure du flan de tôle correspondant et par des rouleaux libres en rotation d'appui de la bande continue sur ladite face supérieure, l'axe desdits rouleaux d'appui étant perpendiculaire au sens de déplacement de la bande continue et horizontal.

L'invention sera mieux comprise à l'aide de la description qui va suivre, donnée uniquement à titre d'exemple, et faite en se référant aux dessins annexés, sur lesquels :
- la Fig. 1 est une vue schématique de dessus d'une installation de soudage par faisceau laser munie du dispositif de guidage et de transfert selon la présente invention,
- la Fig. 2 est une vue schématique en élévation du dispositif de guidage et de transfert selon la présente invention,
- la Fig. 3 est une vue en coupe selon la ligne 3-3 de la Fig. 2,
- la Fig. 4 est une vue schématique en élévation de plusieurs patins d'une chaîne à patins,
- la Fig. 5 est une vue de dessus de plusieurs patins d'une chaîne à patins,
- la Fig. 6 est une vue schématique en coupe transversale d'un second mode de réalisation du dispositif de guidage et de transfert selon la présente invention,
- la Fig.7 est une vue schématique en élévation de plusieurs patins d'une chaîne à patins selon le second mode de réalisation représenté à la Fig. 6.

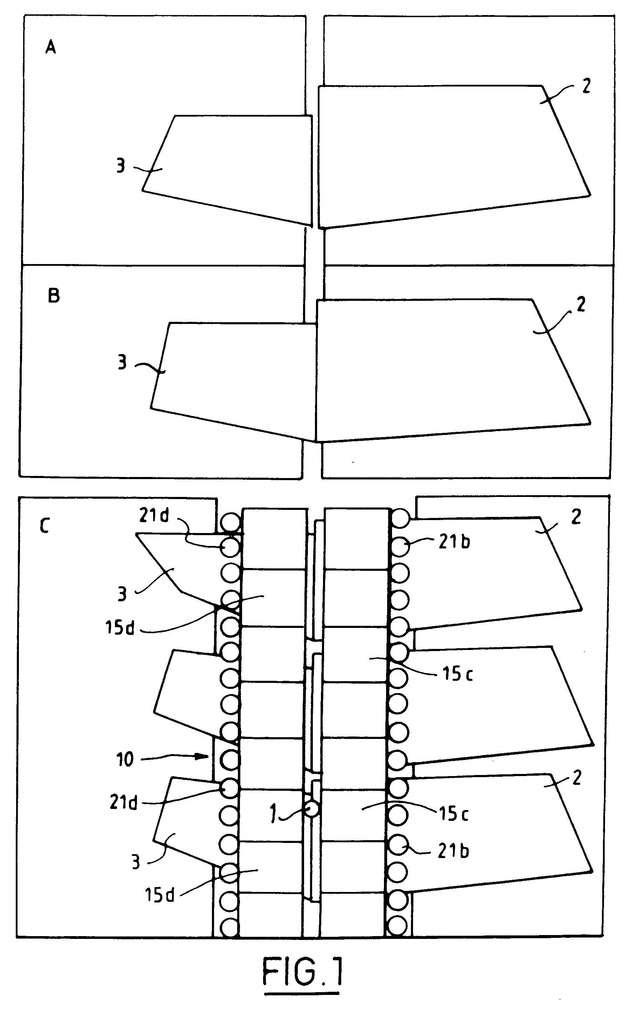

L'installation représentée schématiquement à la Fig.1 est destinée au soudage en continu par un laser 1 successivement de plusieurs paires de flans de tôle 2 et 3 de différentes formes géométriques et/ou de différentes épaisseurs, par exemple pour l'industrie automobile ou pour les industries utilisatrices de pièces semi-finies.

Les deux flans de tôle 2 et 3 de chaque paires sont placés bord à bord et défilent en continu au-dessous du faisceau du laser 1 en vue de leur soudage.

Dans ce but, une installation de soudage par faisceau laser comporte, après découpage des flans de tôle 2 et 3, une zone A de positionnement latéral de l'un des flans de tôle, par exemple le flan de tôle 3, par rapport à l'axe du laser 1, puis une zone B d'accostage des deux flans de tôle bord à bord et enfin une zone C de guidage bord à bord des deux flans de tôle 2 et 3 et d'entraînement de ces flans au-dessous du laser 1.

Dans le but de garantir une bonne qualité de soudure, le positionnement des flans de tôle 2 et 3 doit satisfaire, dans la zone de soudage, à plusieurs exigences qui sont notamment la position relative des bords à souder par rapport à l'axe du laser 1 et la pression relative sur ces bords afin de contrôler, voire réduire, le jeu entre lesdits bords au cours du déplacement des flans de tôle 2 et 3.

A cet effet, la zone C de l'installation de soudage est équipée, d'une part, pour chaque flan de tôle 2 et 3, de moyens de support du flan de tôle 2 ou 3 selon un plan de référence horizontal et déplaçables horizontalement en direction du laser et de moyens de pression verticale du flan de tôle 2 ou 3 sur les moyens de support et déplaçables horizontalement en synchronisation avec lesdits moyens de support pour le déplacement par adhérence des flans de tôle 2 et 3 et, d'autre part, de moyens de maintien en référence selon un plan vertical du bord à souder de l'un des flans de tôle 2 ou 3 dans l'axe du faisceau laser et de moyens de mise en pression latérale des bords à souder des deux flans de tôle 2 et 3.

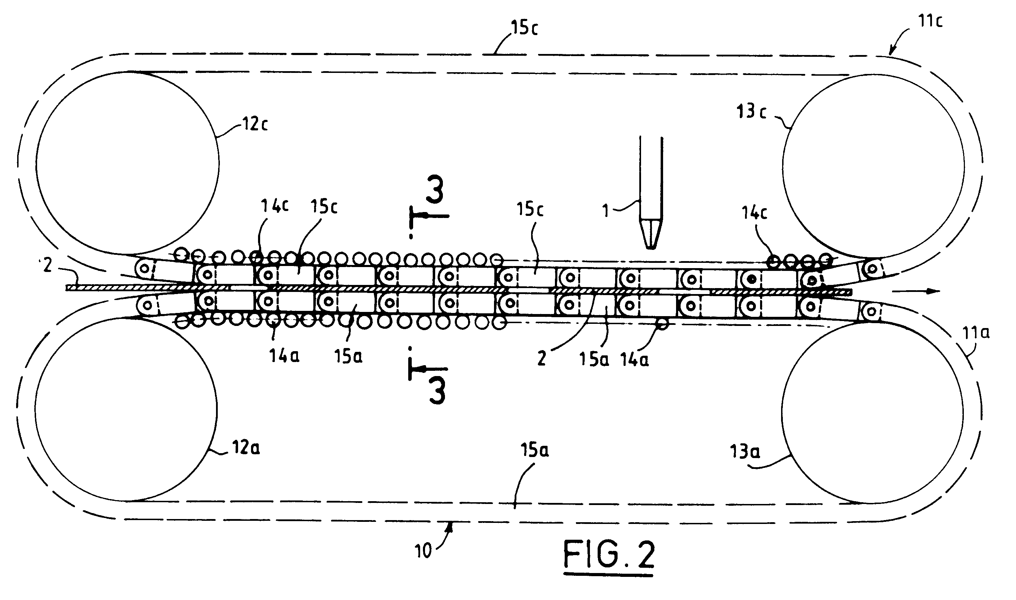

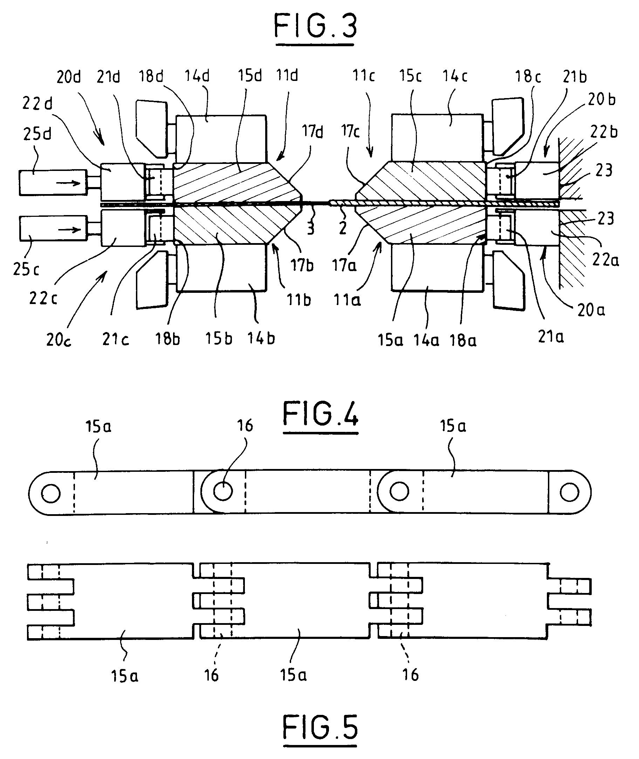

Comme représenté sur les Figs. 2 et 3, les moyens de support du flan de tôle 2 sont formés par une chaîne à patins 11a qui constitue une surface de contact continue avec la face inférieure du flan de tôle 2 et qui forme une boucle dans un plan perpendiculaire aux flans de tôle 2 et 3.

La chaîne à patins 11a est portée par une paire de roues 12a et 13a disposées chacunes à une extrémité de la bande.

Les moyens de support du flan de tôle 2 comprennent également, dans la zone de maintien du flan de tôle 2, des rouleaux 14a cylindriques à génératrice droite et relativement rapprochés les uns des autres, l'axe de rotation desdits rouleaux étant perpendiculaire au sens de déplacement de la chaîne à patins 11a et horizontal.

Ces rouleaux 14a libres en rotation supportent la chaîne à patins 11a de telle sorte que la surface de la chaîne à patins 11a en contact avec la face inférieure 2 détermine un plan de référence horizontal pour le positionnement dudit flan.

La chaîne 11a comprend des patins 15a de forme générale parallélépipèdique et articulés entre eux au moyen de tiges 16, comme représentées sur les Figs. 4 et 5.

Au moins trois rouleaux 14a sont en contact avec chaque patin 15a.

L'entraînement de la chaîne à patins 11a est réalisé par exemple par un système moto-réducteur non représenté et relié à l'une des roues 12a ou 13a.

Les moyens de support du flan de tôle 3 (Fig. 3) sont identiques aux moyens de support du flan de tôle 2 et sont formés par une chaîne à patins 11b qui constitue une surface de contact continu avec la face inférieure du flan de tôle 3 et qui forme une boucle dans un plan perpendiculaire aux flans de tôle 2 et 3.

Dans la zone de maintien du flan de tôle 3, la chaîne à patins 11b est également en appui sur des rouleaux 14b cylindriques à génératrice droite et relativement rapprochés les uns des autres, l'axe de rotation desdits rouleaux étant perpendiculaire au sens de déplacement de la chaîne à patins 11b et horizontal.

Ainsi, la surface de la chaîne à patins 11b en contact avec la face inférieure du flan de tôle 3 détermine un plan de référence horizontal confondu avec le plan de référence horizontal du flan de tôle 2 de telle sorte que les flans de tôle 2 et 3 sont parfaitement alignés.

La chaîne 11b comprend des patins 15b de forme générale parallélépipèdique et articulés entre eux au moyen de tiges 16.

Au moins trois rouleaux 14b sont en contact avec chaque patin 15b.

L'entraînement de la chaîne à patins 11b est réalisé par exemple par un système moto-réducteur.

Les moyens de pression verticale du flan de tôle 2 sur la chaîne à patins 11a sont formés par une chaîne à patins 11c qui constitue une surface de contact continu avec la face supérieure du flan de tôle 2 et forme une boucle dans un plan perpendiculaire aux flans de tôle 2 et 3.

La chaîne à patins 11c est portée par une paire de roues 12c et 13c disposées chacunes à une extrémité de la boucle.

Les moyens de pression verticale du flan de tôle 2 comportent également, dans la zone de maintien du flan de tôle 2, des rouleaux 14c à génératrice droite et relativement rapprochés les uns des autres, l'axe de rotation desdits rouleaux étant perpendiculaire au sens de déplacement de la chaîne à patins 11c et horizontal.

La chaîne 11c comprend des patins 15c de forme générale parallélépipèdique et articulés entre eux au moyen de tiges 16.

L'entraînement de la chaîne à patins 11c est réalisé par exemple par un système moto-réducteur.

Ces rouleaux 14c libres en rotation sont positionnés de telle façon qu'ils exercent une pression superficielle verticale sur les patins 15c de la chaîne 11c pour pincer le flan de tôle 2 entre les patins 15a et 15c.

Au moins trois rouleaux 14c sont en contact avec chaque patin 15c en des endroits régulièrement espacés, répartissant l'effort de compression sur le flan de la tôle 2, afin de maintenir une bonne planéité des patins 15c et de permettre une répartition de l'effort par plusieurs contacts linéaires.

Les moyens de pression verticale du flan de tôle 3 sont identiques et comprennent également une chaîne à patins 11d constituant une surface de contact continue avec la face supérieure du flan de tôle 3 et qui forme une boucle dans un plan perpendiculaire aux flans de tôle 2 et 3.

La chaîne à patins 11d est également portée par une paire de roues et son entraînement est réalisé par exemple par un système moto-réducteur.

La chaîne 11d comprend des patins 15d de forme générale parallélépipèdique et articulés entre eux au moyen de tiges 16.

Les moyens de pression verticale du flan de tôle 3 sur les patins 15b de la chaîne 11b comprennent également des rouleaux 14d cylindriques à génératrice droite et relativement rapprochés les uns des autres, l'axe de rotation desdits rouleaux étant perpendiculaire au sens de déplacement de la chaîne à patins 11d et horizontal.

La position des rouleaux 14d est telle qu'ils exercent une pression superficielle verticale sur les patins 15d de la chaîne 11d de façon à pincer le flan de tôle 3 entre les patins 15b et 15d.

Au moins trois rouleaux 14d sont en contact avec chaque patin 15d en des endroits régulièrement espacés, répartissant ainsi l'effort de compression sur le flan de tôle 3.

Les patins 15a, 15b, 15c et 15d des chaînes 11a, 11b, 11c et 11d sont identiques et par exemple en acier. La face de ces patins en contact avec les flans de tôle 2 ou 3 est recouverte d'une couche par exemple de polymère de façon à éviter tout glissement desdits patins avec lesdits flans de tôle.

Comme représenté sur la Fig. 3, les patins 15a et 15c ménagent avec les patins opposés 15b et 15d un espace suffisant pour le positionnement du laser et le soudage des bords des flans de tôle 2 et 3.

De plus, la face latérale 17a, 17b, 17c, 17d des patins respectivement 15a, 15b, 15c, 15d dirigée vers les bords à souder des flans de tôle 2 et 3 est biseautée, tandis que la face opposée 18a, 18b, 18c, 18d est plane et verticale.

Chaque flan de tôle 2 et 3 est progressivement pincé entre les patins 15a, 15b, 15c, 15d, puis guidé et entraîné par adhérence entre ces patins grâce à la pression superficielle exercée par les rouleaux 14c et 14d.

Les chaînes à patins 11a, 11b, 11c, 11d sont entraînées en synchronisation les unes avec les autres ce qui permet d'entraîner les flans de tôle 2 et 3 dans la direction du soudage, sans aucune glissement possible desdits flans de tôle par rapport aux patins sous pression.

Le dispositif de guidage et de transfert selon la présente invention comporte également des moyens de maintien en référence selon un plan vertical du bord à souder de l'un des flans de tôle 2 ou 3 dans l'axe du faisceau laser et des moyens de mise en pression latérale des bords à souder de flans de tôle 2 et 3.

Ces moyens de maintien en référence et de mise en pression latérale sont disposés de part et d'autre du plan de joint des flans de tôle 2 et 3 et coopèrent chacun avec l'un de ces flans de tôle.

Les moyens de maintien en référence selon un plan vertical du bord à souder de l'un des flans de tôle, par exemple du flan de tôle 2, sont formés par deux chemins de guidage 20a et 20b latéral, parallèles et disposés de part et d'autre du plan horizontal des flans de tôle 2 et 3.

Comme représenté sur la Fig. 3, le chemin de guidage 20a est formé par des galets 21a à axe vertical et libres en rotation, lesdits galets 21a étant en appui sur la surface latérale 18a des patins 15a et montés sur un support 22a fixé sur une surface de référence verticale 23.

Le chemin de guidage 20b est également formé par des galets 21b à axe vertical et libres en rotation, lesdits galets 21b étant en appui sur la surface latérale 18c des patins 15c et montés sur un support 22b fixé sur la surface de référence verticale 23.

Selon une variante, les galets 21a et 21b peuvent être montés directement sur les patins respectivement 15a et 15b et s'appuyer sur la surface de référence verticale 23.

Cette disposition permet, grâce au chemin de guidage 20a et 20b et à la surface de référence 23, de maintenir le bord à souder du flan de tôle 2, préalablement positionné dans la zone de positionnement A de l'installation, dans l'axe du laser 1.

Les moyens de mise en pression latérale des bords à souder des deux flans de tôle 2 et 3 sont formés par deux chemins de guidage 20c et 20d latéral, parallèles et disposés de part et d'autre du plan horizontal de déplacement desdits flans de tôle.

Le chemin de guidage 20c coopère, d'une part, avec les patins 15b de la chaîne 11b et, d'autre part, avec au moins un organe de poussée 25c selon une direction perpendiculaire au plan de joint des flans de tôle 2 et 3.

Le chemin de guidage 20d coopère, d'une part, avec les patins 15d de la chaîne 11d et, d'autre part, avec au moins un organe de poussée 25d selon une direction perpendiculaire au plan de joint des flans de tôle 2 et 3.

Le chemin de guidage 20c est formé par des galets 21c à axe vertical et libres en rotation, lesdits galets 21c étant en appui sur la surface latérale 18b des patins 15b et montés sur un support 22c relié à l'organe de poussée 25c.

Le chemin de guidage 20d est formé par des galets 21d à axe vertical et libres en rotation, lesdits galets 21d étant en appui sur la surface latérale 18d des patins 15d et montés sur un support 22d relié à l'organe de poussée 25d.

Selon une variante, les galets 21c et 21d peuvent être montés directement sur les patins respectivement 15b et 15d et peuvent être en appui sur un guide relié auxdits organes de poussée 25c et 25d.

Les organes de poussée 25c et 25d sont constitués par exemple par des vérins.

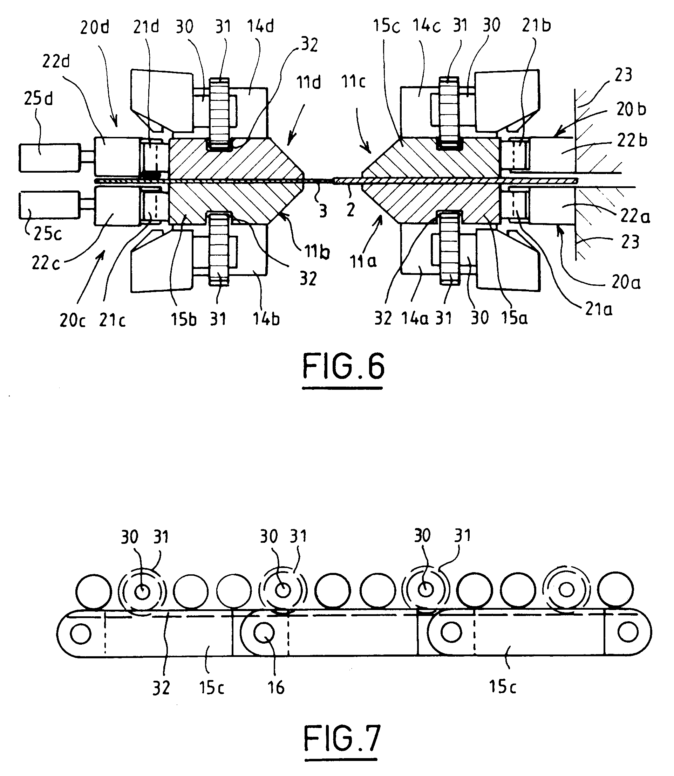

Les Figs. 6 et 7 montrent un autre mode de réalisation des moyens d'entraînement des chaînes à patins 11a, 11b, 11c et 11d.

Dans ce cas, les moyens d'entraînement de chaque chaîne sont formés par des rouleaux moteur 30 intercalés entre les rouleaux de support ou d'appui 14a, 14b, 14c ou 14d de telle sorte qu'au moins un rouleau moteur 30 soit en contact avec un patin 15a, 15b, 15c ou 15d.

Les rouleaux moteur 30 comportent un pignon 31 engrènant avec une crémaillère 32 prévue sur la face des patins 15a, 15b, 15c ou 15d opposée à la face en contact avec le flan de tôle 2 ou 3.

Selon une variante, les moyens de mise en pression verticale des flans de tôle 2 et 3 peuvent être formés par une bande continue en contact avec la face supérieure du flan de tôle 2 ou 3 correspondant et par des rouleaux libres en rotation d'appui de la bande continue sur ladite face supérieure.

Le dispositif selon la présente invention permet de contrôler le jeu entre les bords à souder des deux flans de tôle au cours de leur déplacement pendant toute l'opération de soudage et d'éviter que les bords à souder s'écartent du fait de la dilatation des flans de tôle lors de ce soudage.

La pression latérale exercée sur les patins est réalisée par les vérins. Ces vérins en transmettant leur efforts ne provoquent de déplacements, que lorsque les bords ne sont pas en contact, l'effort appliqué est équilibré par la pression de contact entre les flans, tout en évitant un glissement relatif entre les flans de tôle et les patins.

## Revendications

1. Dispositif de guidage et de transfert d'au moins deux flans de tôle (2, 3) à souder bord à bord, notamment dans une installation de soudage par faisceau laser, comprenant, d'une part, pour chaque flan de tôle (2, 3), des moyens (14a, 15a ; 14b, 15b) de support du flan de tôle (2, 3) selon un plan de référence horizontal et déplaçables horizontalement en direction du faisceau laser et des moyens (14c, 15c ; 14d, 15d) de pression verticale du flan de tôle (2, 3) sur les moyens (14a, 15a ; 14b, 15b) de support et déplaçables horizontalement en synchronisation avec lesdits moyens de support pour le déplacement par adhérence des flans de tôles (2, 3) et, d'autre part, des moyens (20a, 20b) de maintien en référence selon un plan vertical du bord à souder de l'un des flans de tôle (2, 3) dans l'axe du faisceau laser et des moyens (20c, 20d, 25c, 25d) de mise en pression latérale des bords à souder des deux flans de tôle (2,3).

2. Dispositif selon la revendication 1, caractérisé en ce que les moyens de support sont formés par une chaîne à patins (11a, 11b) articulés constituant une surface de contact continue avec la face inférieure du flan de tôle (2, 3) correspondant et par des rouleaux (14a, 14b) libres en rotation supportant la chaîne à patins (11a, 11b) correspondante, l'axe de rotation desdits rouleaux (14a, 14b) étant perpendiculaire au sens de déplacement de la chaîne à patins (11a, 11b) et horizontal.

3. Dispositif selon la revendication 1, caractérisé en ce que les moyens de pression verticale sont formés par une chaîne à patins (11c, 11d) articulés constituant une surface de contact continue avec la face supérieure du flan de tôle (2,3) correspondant et par des rouleaux (14c, 14d) libres en rotation d'appui de la chaîne à patins (11c, 11d) sur ladite face supérieure, l'axe de rotation desdits rouleaux (14c, 14d) étant perpendiculaire au sens de déplacement de la chaîne à patins (11c, 11d) et horizontal.

4. Dispositif selon la revendication 2 ou 3, caractérisé en ce qu'au moins trois rouleaux (14a, 14b, 14c, 14d) sont en contact simultanément avec un patin (15a, 15b, 15c, 15d) de chaque chaîne à patins (11a, 11b, 11c, 11d).

5. Dispositif selon la revendication 2 ou 3, caractérisé en ce que chaque chaîne à patins (11a, 11b, 11c, 11d) forme une boucle dans un plan perpendiculaire auxdits flans de tôle (2, 3) et comporte des moyens d'entraînement en rotation.

6. Dispositif selon l'une quelconque des revendications précédentes, caractérisé en ce que les moyens d'entraînement de chaque chaîne à patins (11a, 11b, 11c, 11d) sont formés par des rouleaux moteur (30, 31) intercalés entre lesdits rouleaux de support ou d'appui (14a, 14b, 14c, 14d), au moins un rouleau moteur (30, 31) étant en contact avec un patin (15a, 15b, 15c, 15d).

7. Dispositif selon la revendication 6, caractérisé en ce que les rouleaux moteur comportent un pignon (31) engrènant avec une crémaillère (32) prévue sur la face des patins (15a, 15b, 15c, 15d) opposée à la face en contact avec le flan de tôle (2, 3).

8. Dispositif selon l'une quelconque des revendications précédentes, caractérisé en ce que chaque patin (15a, 15b, 15c, 15d) comporte sur sa face en contact avec le flan de tôle (2, 3) correspondant une couche d'un matériau assurant un coëfficient de frottement suffisant pour créer l'adhérence avec le flan de tôle correspondant, par exemple un polymère.

9. Dispositif selon la revendication 1, caractérisé en ce que les moyens (20a, 20b) de maintien en référence selon un plan vertical du bord à souder de l'un des flans de tôle (2, 3) et les moyens (20c, 20d, 25c, 25d) de mise en pression latérale des bords à souder des deux flans de tôle (2, 3) sont disposés de part et d'autre du plan de joint des flans de tôle (2, 3) et coopèrent chacun avec l'un de ces flans de tôle (2, 3).

10. Dispositif selon l'une quelconque des revendications précédentes, caractérisé en ce que les moyens de maintien en référence selon un plan vertical du bord à souder de l'un des flans de tôle (2, 3) sont formés par deux chemins de guidage (20a, 20b) latéral, parallèles et disposés de part et d'autre du plan horizontal de déplacement des flans de tôle (2, 3), chaque chemin de guidage (20a, 20b) coopérant, d'une part, avec une surface latérale (18a, 18c) des patins (15a, 15c) de la chaîne (11a, 11c) correspondante et, d'autre part, avec une surface de référence verticale (23).

11. Dispositif selon la revendication 10, caractérisé en ce que chaque chemin de guidage (20a, 20b) est formé par des galets (21a, 21b) à axe vertical et libres en rotation.

12. Dispositif selon les revendications 10 et 11 caractérisé en ce que les galets (21a, 21b) sont en appui sur la surface latérale (18a, 18c) des patins (15a, 15c) et sont montés sur un support (22a, 22b) fixé sur la surface de référence verticale (23).

13. Dispositif selon les revendications 10 et 11, caractérisé en ce que les galets (21a, 21b) sont montés directement sur les patins (15a, 15c) et sont en appui sur la surface de référence verticale (23).

14. Dispositif selon l'une quelconque des revendications 1 à 9, caractérisé en ce que les moyens de mise en pression latérale des bords à souder des deux flans de tôle (2, 3) sont formés par deux chemins de guidage (20c, 20d) latéral, parallèles et disposés de part et d'autre du plan horizontal de déplacement des flans de tôle (2, 3), chaque chemin de guidage (20c, 20d) coopérant, d'une part, avec les patins (15b, 15d) de la chaîne (11b, 11d) correspondante et, d'autre part, avec au moins un organe de poussée (25c, 25d) selon une direction perpendiculaire au plan de joint des flans de tôle (2, 3).

15. Dispositif selon la revendication 14, caractérisé en ce que chaque chemin de guidage (20c, 20d) est formé par des galets (21c, 21d) à axe vertical et libres en rotation.

16. Dispositif selon les revendications 14 et 15, caractérisé en ce que les galets (21c, 21d) sont en appui sur la surface latérale (18b, 18d) des patins (15b, 15d) et sont montés sur un support (22c, 22d) relié audit organe de poussée (25c, 25d).

17. Dispositif selon les revendications 14 et 15, caractérisé en ce que les galets (21c, 21d) sont montés directement sur les patins (15b, 15d) et sont en appui sur un guide relié audit organe de poussée (25c, 25d).

18. Dispositif selon la revendication 14, caractérisé en ce que ledit organe de poussée (25c, 25d) est constitué par au moins un vérin.

19. Dispositif selon la revendication 1, caractérisé en ce que les moyens de pression verticale sont formés par une bande continue en contact avec la face supérieure du flan de tôle (2, 3) correspondant et par des rouleaux libres en rotation d'appui de la bande continue sur ladite face supérieure, l'axe desdits rouleaux étant perpendiculaire au sens de déplacement de la bande continue et horizontal.

## Claims

1. Device for guiding and transporting at least two sheet metal blanks (2, 3) to he welded end to end, in particular in a laser welding device, comprising on the one hand for each sheet metal blank (2, 3) means (41a, 15a; 14b, 15b), which support said sheet metal blank (2, 3) along a horizontal reference plane and may be moved horizontally in the direction of the laser beam, and means (14c, 15c; 14d, 15d), which press the sheet metal blank (2, 3) vertically onto said support means (14a, 15a; 14b, 15b) and may be moved horizontally to synchronise with said support means for movement of the sheet metal blanks (2, 3) by means of adhesion, and comprising on the other hand means (20a, 20b) for holding the edge of one of the sheet metal blanks (2, 3) to be welded in the axis of the laser beam in alignment with a vertical plane and means (20c, 20d, 25c, 25d) for applying lateral pressure to the edges of the two sheet metal blanks (2, 3) to be welded.

2. Device according to claim 1, characterized in that the support means are formed by track of articulated links (11a, 11b) forming a continuous contact surface with the lower face of the corresponding sheet metal blank (2, 3) and by freely rotating rollers (14a, 14b) supporting the corresponding track (11a, 11b), the axis of rotation of said rollers (14a, 14b) being perpendicular to the direction of movement of the track (11a, 11b) and horizontal.

3. Device according to claim 1, characterised in that the vertical pressure means are formed by articulated track links (11c, 11d) forming a continuous contact surface with the upper face of the corresponding sheet metal blank (2, 3) and by freely rotating rollers (14c, 14d) to carry the track (11c, 11d) on said upper face, the axis of rotation of said rollers (14c, 14d) being perpendicular to the direction of movement of the track (11c, 11d) and horizontal.

4. Device according to Claim 2 or 3, characterized in that at least three rollers (14a, 14b, 14c, 14d) are in contact simultaneously with a track link (15a, 15b, 15c, 15d) of each track (11a, 11b, 11c, 11d).

5. Device according to Claim 2 or 3, characterized in that each track (11a, 11b, 11c, 11d) forms a loop in a perpendicular plane to said sheet meal blanks (2, 3) and comprises rotating drive means.

6. Device according to any one of the preceding claims, characterized in that the drive means of each track (11a, 11b, 11c, 11d) are formed by drive rollers interposed between said carrying or support rollers (14a, 14b, 14c, 14d), at least one drive roller (30, 31) being in contact with a track link (15a, 15b, 15c, 15d).

7. Device according to Claim 6, characterized in that the drive rollers comprise a pirion (31) which engages with a toothed rack (32) provided on the face of the track links (15a, 15b, 15c, 15d) opposing the face in contact with the sheet metal blank (2, 3).

8. Device according to any one of the preceding claims, characterized in that each track link (15a, 15b, 15c, 15d) is provided with a layer of material on its face in contact with the sheet metal blank (2, 3), said material, e.g. a polymer, assuring a coefficient of friction sufficient to generate adhesion with the corresponding sheet metal blank (2, 3).

9. Device according to Claim 1, characterized in that the means (20a, 20b) for holding an edge of one of the sheet metal blanks (2, 3) to be welded in alignment with a vertical plane and the means (20c, 20d; 25c, 25d) for applying lateral pressure to the edges of the two sheet metal blanks (2, 3) to be welded are disposed on both sides of the joining plane of the sheet metal blanks (2, 3) and each cooperates with one of these sheet metal blanks (2, 3).

10. Device according to any one of the preceding claims, characterised in that the means for holding an edge of one of the sheet metal blanks (2, 3) to be welded in alignment with a vertical plane are formed by two parallel lateral guideways (20a, 20b) disposed on both sides of the horizontal plane of movement of the sheet metal blanks (2, 3), each guideway (20a, 20b) cooperating on the one hand with a lateral surface (18a, 18c) of the track links (15a, 15c) of the corresponding track (11a, 11c) and on the other hand with a vertical reference surface (23).

11. Device according to Claim 10, characterized in that each guideway (20a, 20b) is formed by freely rotating rolls (21a, 21b) with vertical axis.

12. Device according to Claims 10 and 11, characterized in that the rolls (21a, 21b) are supported on the lateral surface (18a, 18c) of the track links (15a, 15c) and are mounted on a fixed support (22a, 22b) on the vertical reference surface (23).

13. Device according to Claims 10 and 11, characterized in that the rolls (21a, 21b) are mounted directly on the track links (15a, 15c) and are supported on the vertical reference surface (23).

14. Device according to any one of Claims 1 to 9, characterized in that the means for applying lateral pressure to the edges of the two sheet metal blanks (2, 3) to be welded are formed by two parallel lateral guideways (20c, 20d) disposed on both sides of the horizontal plane of movement of the sheet metal blanks (2, 3), each guideway (20c, 20d) cooperating on the one hand with the track links (15b, 15d) of the corresponding track (11b, 11d) and on the other hand with at least one pushing element (25c, 25d) in a direction perpendicular to the joining plane of the sheet metal blanks (2, 3).

15. Device according to Claim 14, characterised in that each guideway (20c, 20d) is formed by freely rotating rolls (21c, 21d) with vertical axis.

16. Device according to claims 14 and 15, characterized in that the rolls (21c, 21d) are supported on the lateral surface (18b, 18d) of the track links (15b, 15d) and are mounted on a support (22c, 22d) joined to said pushing element (25c, 25d).

17. Device according to claims 14 and 15, characterized in that the rolls (21c, 21d) are mounted directly on the track links (15b, 15d) and are supported on a guide element joined to said pushing element (25c, 25d).

18. Device according to claim 14, characterized in that said pushing element (25c, 25d) consists of at least one jack.

19. Device according to claim 1, characterized in that the vertical pressure means are formed by a continuous belt in contact with the upper face of the corresponding sheet metal blank (2, 3) and by freely rotating rollers supporting he continuous belt on said upper face, the axis of said rollers being perpendicular to the direction of movement of the continuous belt and horizontal.

## Patentansprüche

1. Vorrichtung zum Führen und Fördern von mindestens zwei stumpf zu verschweißenden Blechen (2, 3), insbesondere in einer Laserstrahlschweißanlage, die einerseits für jedes Blech (2, 3) waagerecht zum Laserstrahl verschiebbare Mittel (14a, 15a ; 14b, 15b) zur Aufnahme der Bleche (2, 3) auf waagerechter Bezugsebene, sowie Mittel (14c, 15c ; 14d, 15d) zur Ausübung von Vertikaldruck des Bleches (2, 3) auf die Aufnahmemittel (14a, 15a ; 14b, 15b), welche synchron zu besagten Aufnahmemitteln waagerecht verschiebbar sind, um eine haftungsbedingte Fortbewegung der Bleche (2, 3) zu ermöglichen, aufweist, und andererseits Haltemittel (20a, 20b) auf vertikaler Bezugsebene zum zu verschweißenden Rand eines der Bleche (2, 3), in der Achse des Laserstrahls und der Mittel zur Seitendruckausübung (20c, 20d, 25c, 25c) auf die zu verschweißenden Blechränder (2,3), aufweist.

2. Vorrichtung gemaß Anspruch 1, **dadurch gekennzeichnet,** daß die Aufnahmemittel aus einer gegliederten Kufenkette (11a, 11b), welche die durchgehende Kontaktfläche mit der Unterseite des entsprechenden Bleches (2, 3) bildet, und aus freilaufenden Walzen (14a, 14b), zur Aufnahme der entsprechenden Kufenkette (11a, 11b), bestehen, wobei die Rotationsachse der besagten Walzen (14a, 14b), senkrecht zur Laufrichtung der Kufenkette (11a, 11b), horizontal verläuft.

3. Vorrichtung gemäß Anspruch 1, **dadurch gekennzeichnet**, daß die Mittel zur vertikalen Druckausübung durch eine gegliederte Kufenkette (11c, 11d), welche die durchgehende Kontaktfläche mit der Oberseite des entsprechenden Bleches (2, 3) bildet, und aus freilaufenden Walzen (14c, 14d) zur Aufnahme der entsprechenden Kufenkette (11c, 11d), bestehen, wobei die Rotationsachse der besagten Walzen (14c, 14d), senkrecht zur Laufrichtung der Kufenkette (11c, 11d), horizontal verläuft.

4. Vorrichtung gemäß Anspruch 2 oder 3, **dadurch gekennzeichnet**, daß gleichzeitig mindestens drei Walzen (14a, 14b, 14c, 14d) mit einer Kufe (15a, 15b, 15c, 15d) jeder Kufenkette (11a, 11b, 11c, 11d) in Kontakt sind.

5. Vorrichtung gemäß Anspruch 2 oder 3, **dadurch gekennzeichnet**, daß jede Kufenkette (11a, 11b, 11c, 11d) eine Schleife senkrecht zu besagten Blechen (2, 3) bildet und Antriebsmittel bei der Rotation aufweist.

6. Vorrichtung gemäß eines beliebigen vorangehenden Anspruchs, **dadurch gekennzeichnet**, daß die Antriebsmittel jeder Kufenkette (11a, 11b, 11c, 11d) aus zwischen besagten Aufnahmewalzen (14a, 14b, 14c, 14d) eingeschobenen Antriebswalzen (30, 31) bestehen, wobei mindestens eine Antriebswalze (30, 31) mit einer Kufe (15a, 15b, 15c, 15d) in Kontakt ist.

7. Vorrichtung gemaß Anpruch 6, **dadurch gekennzeichnet**, daß die Antriebswalzen ein in eine Zahnstange (32) greifendes Zahnrad (31) aufweisen, wobei die Zahnstange auf der Gegenseite der mit den Blechen (2, 3) in Kontakt stehenden Seite der Kufen (15a, 15b, 15c, 15d) vorgesehen ist.

8. Vorrichtung gemäß eines beliebigen vorangehenden Anspruchs , **dadurch gekennzeichnet**, daß jede Kufe (15a, 15b, 15c, 15d) auf ihrer mit dem entsprechenden Blech (2, 3) in Kontakt stehenden Seite eine Beschichtung aus einem Material aufweist, welches eine zur Haftung am entsprechenden Blech ausreichende Reibzahl aufweist, zum Beispiel aus einem Polymer.

9. Vorrichtung gemäß Anspruch 1, **dadurch gekennzeichnet**, daß die Mittel zur Haltung (20a, 20b) auf vertikaler Bezugsebene zum zu verschweißenden Rand eines der beiden Bleche (2, 3) sowie die Mittel zur Seitendruckausübung (20c, 20d, 25c, 25d) auf die zu verschweißenden Ränder beider Bleche (2,3) auf beiden Seiten der Zusammenfügungsebene der Bleche (2, 3) angebracht sind und jedes von ihnen mit jeweils einem Blech (2,3) zusammenarbeitet.

10. Vorrichtung gemäß eines beliebigen vorangehenden Anspruchs , **dadurch gekennzeichnet**, daß die Haltemittel (20a, 20b) auf vertikaler Bezugsebene zum stumpf zu verschweißenden Rand eines der beiden Bleche (2, 3) aus zwei seitlichen Führungswegen (20a, 20b) bestehen, die parallel und zu beiden Selten der horizontalen Förderungsebene der Bleche (2, 3) angebracht sind, wobei jeder Führungsweg (20a, 20b) einerseits mit der Seitenflache (18a, 18c) der Kufen (15a, 15c) der entsprechenden Kette (11a, 11c) zusammenarbeitet, und andererseits mit einer vertikalen Bezugsfläche (23).

11. Vorrichtung gemäß Anspruch 10, **dadurch gekennzeichnet**, daß jeder Führungsweg (20a, 20b) aus auf vertikaler Achse freilaufenden Rollen (21a, 21b) bestehen.

12. Vorrichtung gemäß Ansprüchen 10 und 11, **dadurch gekennzeichnet**, daß die Rollen (21a, 21b) auf der Seitenfläche (18a, 18c) der Kufen (15a, 15c) aufliegen, und auf einer Aufnahmevorrichtung (22a, 22b) montiert sind, welche auf der vertikalen Bezugsflache (23) angebracht ist.

13. Vorrichtung gemäß Ansprüchen 10 und 11, **dadurch gekennzeichnet**, daß die Rollen (21a, 21b) direkt auf den Kufen (15a, 15c) montiert sind und auf der vertikalen Bezugsfläche (23) aufliegen.

14. Vorrichtung gemäß eines beliebigen der Ansprüche zwischen 1 und 9, **dadurch gekennzeichnet**, daß die Mittel zur Seitendruckausüburg auf die zu verschweißenden Ränder beider Bleche (2,3) aus zwei seitlichen Führungswegen (20c, 20d) bestehen, welche parallel und zu beiden Seiten der horizontalen Förderungsebene der Bleche (2, 3) angebracht sind, wobei jeder Führungsweg (20c, 20d) einerseits mit den Kufen (15b, 15d) der entsprechenden Kette (11b, 11d) zusammenarbeitet, und andererseits mit mindestens einem Druckorgan (25c, 25d), welches senkrecht zur Zusammenfügungsebene der Bleche (2, 3) arbeitet.

15. Vorrichtung gemäß Anspruch 14, **dadurch gekennzeichnet**, daß jeder Führungsweg (20c, 20d) aus auf vertikaler Achse freilaufenden Rollen (21c, 21d) besteht.

16. Vorrichtung gemäß Ansprüchen 14 und 15, **dadurch gekennzeichnet**, daß die Rollen (21c, 21d) auf der Seitenfläche (18b, 18d) der Kufen (15b, 15d) aufliegen, und auf einer Aufnahmevorrichtung (22c, 22d) montiert sind, welche mit besagtem Druckorgan (25c, 25d) verbunden ist.

17. Vorrichtung gemäß Ansprüchen 14 und 15, **dadurch gekennzeichnet**, daß die Rollen (21c, 21d) direkt auf den Kufen (15b, 15d) montiert sind und auf einem Führungsteil allfliegen, welches mit besagtem Druckorgan (25c, 25d) verbunden ist.

18. Vorrichtung gemäß Anspruch 14 , **dadurch gekennzeichnet**, daß besagtes Druckorgan (25c, 25d) aus mindestens einem Hydraulikzylinder besteht.

19. Vorrichtung gemäß Anspruch 1, **dadurch gekennzeichnet**, daß die Mittel zur vertikalen Druckausübung aus einem durchgehenden, mit der Oberseite des entsprechenden Blechs (2, 3) in Kontakt stehenden Band sowie aus freilaufenden Walzen, welche das Band gegen die besagte Oberseite drücken, wobei die Achse der besagten Walzen senkrecht zur Förderrichtung des durchgehenden horizontalen Bandes verläuft.
